# EUROPEAN PATENT APPLICATION

(11) **EP 2 505 991 A1**
(43) Date of publication of application: **03.10.2012**
(21) Application number: 12160337.7
(22) Date of filing: 20.03.2012
(51) Int. Cl.: G01N 21/78, G01N 33/53

(54) **Biological material analyzer and biological material analysis method**

(30) Priority: 31.03.2011 JP 2011080967
(71) Applicant: Fujifilm Corporation, Minato-ku Tokyo (JP)
(72) Inventor: Horii, Kazuyoshi, Kanagawa (JP)
(74) Representative: Klunker . Schmitt-Nilson . Hirsch

(57) **Abstract**

An analyzer includes a holder for a chip having a spreading layer for a sample including a biological material and a reaction layer with a reagent that reacts with the biological material and generates a chromogenic material, a first light source that applies first light that is absorbed by the chromogenic material, a first detector that detects first output light from the chip irradiated with the first light, a second light source that applies second light that is absorbed by the biological material, a second detector that detects second output light from the chip irradiated with the second light, and a calculation unit that calculates a first concentration of the biological material from the first output light, calculates a spreading state of the sample from the second output light, and calculates a second concentration of the biological material by correcting the first concentration using the calculated spreading state.

## Description

### BACKGROUND

### Technical Field

The present invention relates to a biological material analyzer and a biological material analysis method, and more particularly, to a biological material analyzer a biological material analysis method that use an analysis chip provided with a spreading layer for spreading a spot applied sample and a reaction layer with a reagent that reacts with an examination target in the sample and generates a chromogenic material, and.

### Related Art

In a case in which a sample of a biological material is analyzed using the above-described analysis chip, when the sample is spot applied on the spreading layer of the analysis chip, the sample spreads in the spreading layer, and when the sample arrives at the reaction layer, the examination target in the sample reacts with the reagent in the reaction layer, and thus a chromogenic material is generated. The concentration of the examination target in the sample can be measured by irradiating the reaction layer with detection light including light having a wavelength that is absorbed by the chromogenic material from a light source and by measuring the scatter reflection light from the reaction layer.

However, depending on the analysis chip or the state of the spot application to the analysis chip, the spread state in the spreading layer is not uniform, and as a result, an error may be caused in an concentration of the examination target in the measured sample.

There are disclosures of a technique (see International Publication WO2002/010728) to measure whether or not a physiological sample is present on an examination strip by using the reflection of visible light and a technique (see U.S. Patent No. 4,420,566) to measure whether or not a sample liquid sufficient for analysis is present on an analysis slide by using light having a wavelength of 1.945 µm, but these are not a technique to correct the measured concentration of the sample.

A main object of the present invention is to provide a biological material analyzer that can, when using an analysis chip provided with a spreading layer for spreading a sample including a biological material and a reaction layer with a reagent that reacts with an examination target in the sample and generates a chromogenic material to measure the concentration of the sample, correct the measured concentration of the examination target in the sample in accordance with a spread state of the sample in the spreading layer, and a biological material analysis method.

### SUMMARY OF THE INVENTION

According to a first aspect of the present invention, there is provided a biological material analyzer comprising: an analysis chip holding unit that holds an analysis chip provided with a spreading layer for spreading a sample including a biological material that is an examination target and a reaction layer provided with a reagent that reacts with the biological material and generates a chromogenic material; a first light source that irradiates the reaction layer with first light including a first wavelength component that is absorbed by the chromogenic material; a first detection unit that detects first output light from the analysis chip when the reaction layer is irradiated with the first light; a second light source that irradiates the reaction layer with second light including a second wavelength component that is absorbed by the biological material and is not absorbed by air, the second light having a wavelength region different from a wavelength region of the first light; a second detection unit that detects second output light from the analysis chip when the reaction layer is irradiated with the second light; and a calculation unit that calculates a first concentration of the biological material in the sample from the first output light detected by the first detection unit, calculates a spreading state of the sample in the spreading layer from the second output light detected by the second detection unit, and calculates a second concentration of the biological material in the sample by correcting the first concentration by using the calculated spreading state.

According to a second aspect of the present invention, there is provided a biological material analysis method comprising: irradiating a reaction layer of an analysis chip provided with a spreading layer for spreading a sample including a biological material that is an examination target and the reaction layer provided with a reagent that reacts with the biological material and generates a chromogenic material with first light including a first wavelength component that is absorbed by the chromogenic material to detect first output light of the first light from the analysis chip; irradiating the reaction layer with second light including a second wavelength component that is absorbed by the biological material and is not absorbed by air and having a wavelength region different from a wavelength region of the first light to detect second output light of the second light from the analysis chip; and calculating a first concentration of the biological material in the sample from the first output light detected by first detection unit, calculating a spreading state of the sample in the spreading layer from the second output light detected by second detection unit, and thereby calculating a second concentration of the biological material in the sample by correcting the first concentration by using the calculated spreading state.

### BRIEF DESCRIPTION OF THE DRAWINGS

An exemplary embodiment of the present invention will be described in detail based on the following figures, wherein:
Fig. 1 is a graph showing the absorption of water;
Fig. 2 is a graph showing the absorption of air;
Fig. 3 is a schematic configuration diagram for explaining a biological material analyzer of a preferred embodiment of the present invention;
Fig. 4 is a schematic configuration diagram for explaining a light source that is preferably used in the biological material analyzer of the preferred embodiment of present the invention;
Fig. 5 is a graph showing a relationship between the time and the scatter reflection light of near-infrared light from an analysis chip that is used in the biological material analyzer and a biological material analysis method of the preferred embodiment of the present invention;
Figs. 6A to 6C are graphs showing the relationship between the time and the scatter reflection light of near-infrared light from the analysis chip that is used in the biological material analyzer and the biological material analysis method of the preferred embodiment of the present invention; and
Fig. 7 is a flowchart for explaining the biological material analysis method of the preferred embodiment of the present invention.

### DETAILED DESCRIPTION OF THE INVENTION

Hereinafter, preferred embodiments of the invention will be described with reference to the drawings.

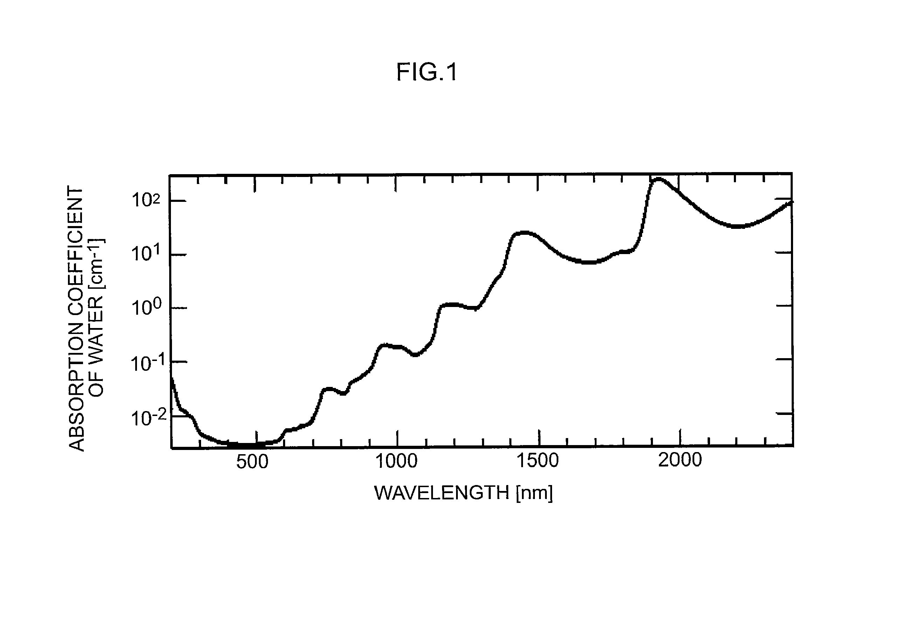

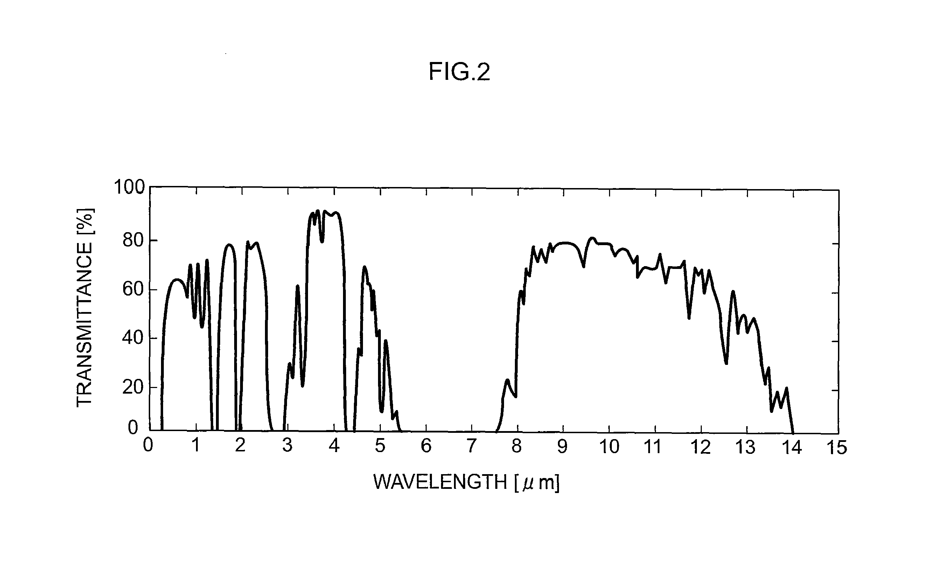

First, the absorption of water and the absorption of air will be described with reference to Figs. 1 and 2. Fig. 1 is a graph showing the absorption of water. Fig. 2 is a graph showing the absorption of air. It is found that a wavelength is present that is transmitted through the air and is strongly absorbed by water at a wavelength region in a near-infrared region (0.7 to 2.5 µm). 1.4 µm or less, 1.6 to 1.9 µm, and 2.0 to 2.5 µm, which are aimed at the atmospheric window, are approximately equivalent to the wavelength. Since a biological material includes water, the biological material can be detected in the air when light including the light having the wavelength is used.

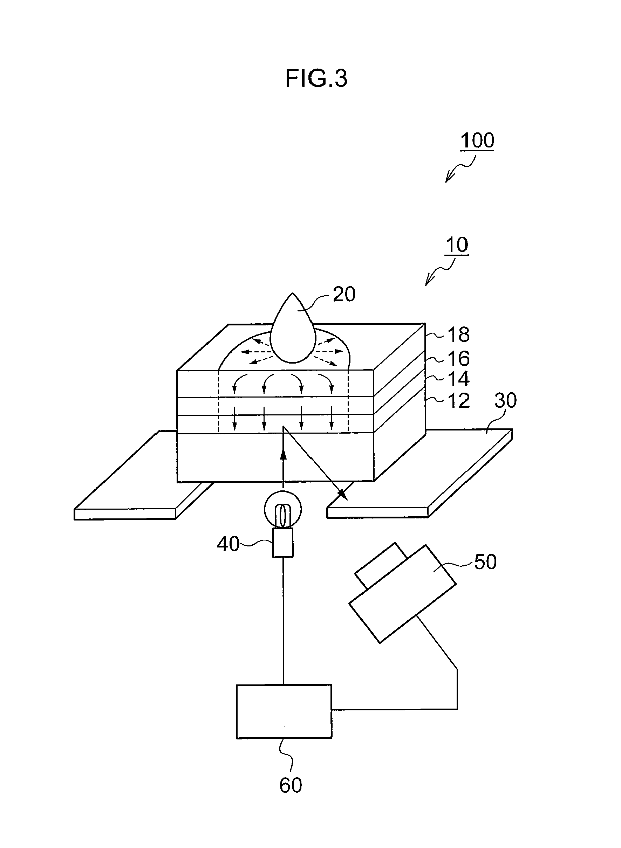

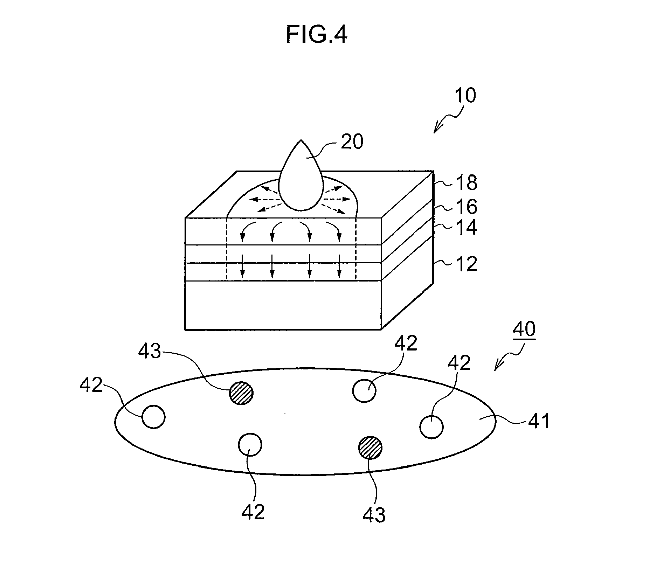

Next, a biological material analyzer of a preferred embodiment of the present invention will be described with reference to Figs. 3 and 4. A biological material analyzer 100 of the preferred embodiment of the present invention is provided with an analysis chip holding section 30 that holds an analysis chip 10 for analyzing a biological material, a light source 40, a photodiode 50, and a computer 60.

The analysis chip 10 is provided with a reaction layer 14 that is provided on a transparent support 12 made of PET or the like, a reflection layer 16 that is provided on the reaction layer 14, and a spreading layer 18 that is provided on the reflection layer 16. When a sample 20 including a biological material is spot applied, the sample 20 spreads in the spreading layer 18 due to the capillarity phenomenon. The reflection layer 16 is used to block an optical effect of the sample 20 including a biological material, but can also be omitted depending on a kind of the sample 20 and the wavelength of the light from the light source 40. The reaction layer 14 is provided with a reagent that reacts with an examination target in the sample 20 and generates a chromogenic material.

As shown in Fig. 4, the light source 40 is provided with two kinds of light sources 42 and 43. The light sources 42 and 43 are disposed at the same light source support 41. Light beams from the light sources 42 and 43 are each applied to the reaction layer 14 from the side of the transparent support 12.

The light source 42 applies light (detection light), which includes light having a wavelength that is absorbed by a chromogenic material that is generated due to the reaction of the examination target in the sample 20 and the reagent in the reaction layer 14, to the reaction layer 14. The light source 42 may be a light source such as a laser or an LED, and is not particularly limited. However, it is preferable that the light have a narrow wavelength band and be matched to light having a wavelength that is absorbed by a chromogenic material generated due to the reaction of the reagent and the sample 20. For example, the light may be light that is obtained by passing light from a light source having a broad visual light range through a band-pass filter (BPF) to filter out a particular wavelength and the vicinity thereof.

The light source 43 applies light that includes light having a wavelength in a wavelength region in the above-described near-infrared region (0.7 to 2.5 µm) to the reaction layer 14. The light source 43 is not limited as long as it is a light source including an infrared light such as a laser or an LED. However, it is preferable that the light have a narrow wavelength band and be matched to infrared light, particularly, the near-infrared region (0.7 to 2.5 µm). For example, the light may be light that is obtained by passing light from a light source having a broad spectrum such as a halogen lamp through a band-pass filter (BPF) to filter out a particular wavelength and the vicinity thereof.

The light that is applied from the side of the reaction layer 14 to the analysis chip 10 from the light source 42 is absorbed, transmitted, and reflected by the analysis chip 10 (mainly by the reaction layer 14). Among the light beams reflected by the analysis chip 10, the scatter reflection light beams are detected by the photodiode 50. In addition, the light that is applied from the side of the reaction layer 14 to the analysis chip 10 from the light source 43 is absorbed, transmitted, and reflected by the analysis chip 10 (mainly by the reaction layer 14). The light beams (scatter reflection light beams and regular reflection light beams) reflected by the analysis chip 10 are detected by the photodiode 50. In this embodiment, a silicon photodiode is used as the photodiode 50, and since the same photodiode 50 can detect both the visible light and the near-infrared light, the same photodiode 50 detects both the scatter reflection light of the light applied from the side of the reaction layer 14 to the analysis chip 10 from the light source 42 and the reflection light (scatter reflection light and regular reflection light) of the light applied from the side of the reaction layer 14 to the analysis chip 10 from the light source 43. However, a detector that detects the scatter reflection light of the light applied to the analysis chip 10 from the light source 42 and a detector that detects the reflection light (scatter reflection light and regular reflection light) of the light applied to the analysis chip 10 from the light source 43 may be separately provided.

The computer 60 controls the light source 40 and the photodiode 50 and performs calculation to be described later.

In a dry-type biochemical examination using the analysis chip 10 as in this embodiment, the sample 20 spreads in the spreading layer (membrane) 18 due to the capillarity phenomenon after spot application, arrives at the reaction layer 14 through the reflection layer 16, reacts with the reagent in the reaction layer 14, and thus generates a chromogenic material. When the photodiode 50 detects the intensity of the scatter reflection light from the analysis chip 10 (mainly from the reaction layer 14) with respect to the light from the light source 42, the concentration of the examination target in the sample 20 can be measured. A calibration curve showing the relationship between the intensity of the scatter reflection light detected by the photodiode 50 and the concentration of the examination target in the sample 20 is obtained in advance and stored in the computer 60, and by using the calibration curve, the computer 60 obtains the concentration of the examination target in the sample 20 from the intensity of the scatter reflection light detected by the photodiode 50.

In the dry-type biochemical examination using the analysis chip 10 as in this embodiment, the sample 20 is spot applied to the spreading layer 18, and then spreads in the spreading layer (membrane) 18 due to the capillarity phenomenon. When viewing the analysis chip (slide) 10 in the vertical direction, the sample 20 spreads two-dimensionally, but the reaction state of the sample 20 and the reaction layer 14 significantly varies depending on the speed of the spreading and the elapsed time. For example, when the sample spreads excessively slowly, the reaction is most advanced in the vicinity of the center of the part where the sample is spot applied, and in a part at the furthest end to which the sample spreads, the reaction is the slowest, whereby a spatial distribution of the reaction is generated. This cannot be completely disregarded even when the spreading is rapid. Such a spreading speed varies depending on a difference in the spatial distribution of the hydrophilic/hydrophobic properties of the spreading layer 18 of the analysis chip (slide) 10, the composition of the sample 20 (for example, a difference in the hematocrit, a difference between healthy blood and lipemia, and the like), and a difference in the treatment (for example, whether the anticoagulant is treated with heparin or EDTA), and is not constant.

In view of the above, the output light (in this embodiment, scatter reflection light and regular reflection light) from the analysis chip 10 with respect to the light that includes light having a wavelength in a wavelength region in the near-infrared region (0.7 to 2.5 µm) from the light source 43 is detected by the photodiode 50, the spread state of the sample 20 in the spreading layer 18 is calculated, the concentration of the examination target in the sample 20, that is obtained by the computer 60 from the intensity of the scatter reflection light detected by the photodiode 50 by using the calibration curve as described above, is corrected by using the calculated spread state, and thus the concentration of the sample 20 is calculated by the computer 60 with higher accuracy. In the calculation of the spread state of the sample 20 in the spreading layer 18, among the output light beams from the analysis chip 10 with respect to the light that includes light having a wavelength in the near-infrared region from the light source 43, not only the scatter reflection light beams, but also the regular reflection light beams may be used.

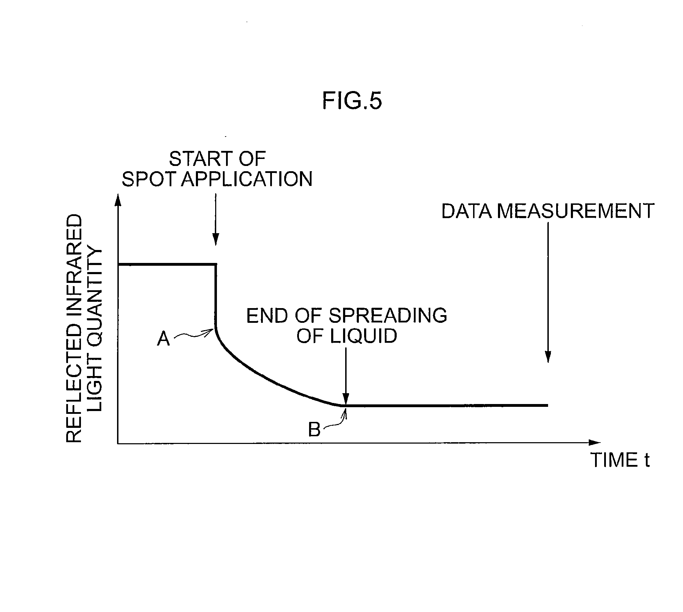

Fig. 5 is a graph showing the relationship between the time and the scatter reflection light of the near-infrared light from the analysis chip 10 that is used in the biological material analyzer and the biological material analysis method of the preferred embodiment of the invention. The horizontal axis represents the time, and the vertical axis represents a light quantity of the scatter reflection light from the analysis chip 10 with respect to the light that includes light having a wavelength in a wavelength region in the near-infrared region (0.7 to 2.5 µm) from the light source 43, that is detected by the photodiode 50. When a sample 20 including a biological material is spot applied, the light quantity of the scatter reflection light is rapidly reduced (see the point A) at first. Therefore, it is possible to detect whether or not the sample 20 is spot applied. Then, the sample 20 spreads in the spreading layer 18 due to the capillarity phenomenon. When the spreading of the sample 20 in the spreading layer 18 ends, the light quantity of the scatter reflection light is saturated and becomes constant (see the point B), whereby it is possible to detect the end of the spreading of the sample 20.

However, the spreading speed is not constant as described above. Therefore, in the case in which the amount of the color forming dye of the reaction layer 14 increases with the concentration of the examination target, when the spreading speed is low, a lower value of the concentration than the actual concentration is shown when obtaining the concentration of the examination target in the sample 20 from the intensity of the scatter reflection light detected by the photodiode 50 by using the calibration curve obtained in advance.

A correction method in the end-point method to calculate the concentration of the sample by the value of the output light from the analysis chip 10 with respect to the detection light from the light source 42 when a predetermined period of time has elapsed after the start of the spot application will be shown.

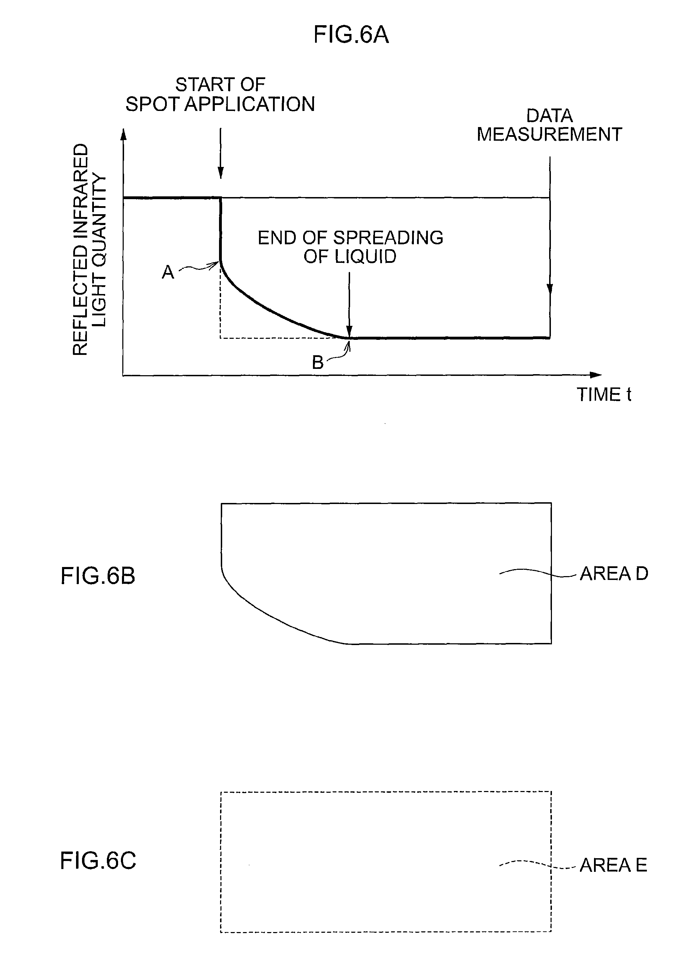

When a variation is observed in the quantity of the reflected infrared light as in Fig. 6A, the output light from the analysis chip 10 with respect to the detection light from the light source 42 is measured at a time of "data measurement" to obtain a value S 1 of the output light. The area E in Fig. 6C corresponds to a reaction amount when the sample liquid spreads sufficiently rapidly, and the area D in Fig. 6B corresponds to a reaction amount when the sample liquid slowly spreads.

A method of obtaining the concentration of the sample when a calibration curve F(S) is created in advance by using the output light when the sample liquid spreads sufficiently rapidly will be shown. When the sample liquid spreads sufficiently rapidly in the actual measurement for obtaining the concentration, the reflected infrared light intensity is measured as shown by the broken line in Fig. 6C, and the output light from the analysis chip 10 with respect to the detection light from the light source 42 has a value of S1, a concentration C of the sample is obtained as C=F(S1) by using the calibration curve. Next, when the sample liquid slowly spreads in the actual measurement for obtaining the concentration, the infrared reflected light intensity is measured as shown by the solid line in Fig. 6B, and the output light from the analysis chip 10 with respect to the detection light from the light source 42 has a value of S1, a correction value of S1xE/D is obtained in order to correct the effect of the overall reduction in the reaction amount due to the slow spreading of the sample liquid, and then a concentration C of the sample is obtained as C=F(S1×E/D) by using the calibration curve. Generally speaking, an area showing the reaction amount of the spreading state of the sample liquid when the calibration curve is determined is employed as a numerator, and an area showing the reaction amount of the spreading state of the sample liquid in the actual measurement is employed as a denominator to correct the value of the output light from the analysis chip 10 with respect to the detection light from the light source 42, and thus the correction to the reaction amount when the calibration curve is obtained in advance is possible.

The calculation method to correct the output light from the analysis chip 10 with respect to the detection light from the light source 42 from the areas E and D may be the simplest correction calculation in which the value E/D obtained by dividing E by D based on the fact that the signal amount which is proportional to the reaction time is multiplied by the output value S1. However, the calculation may be performed using functions that are generally used.

By using arbitrary functions P, Q, and R, the correction calculation is expressed by:
S1×P(E)/Q(D); or
S1×R(E/D).

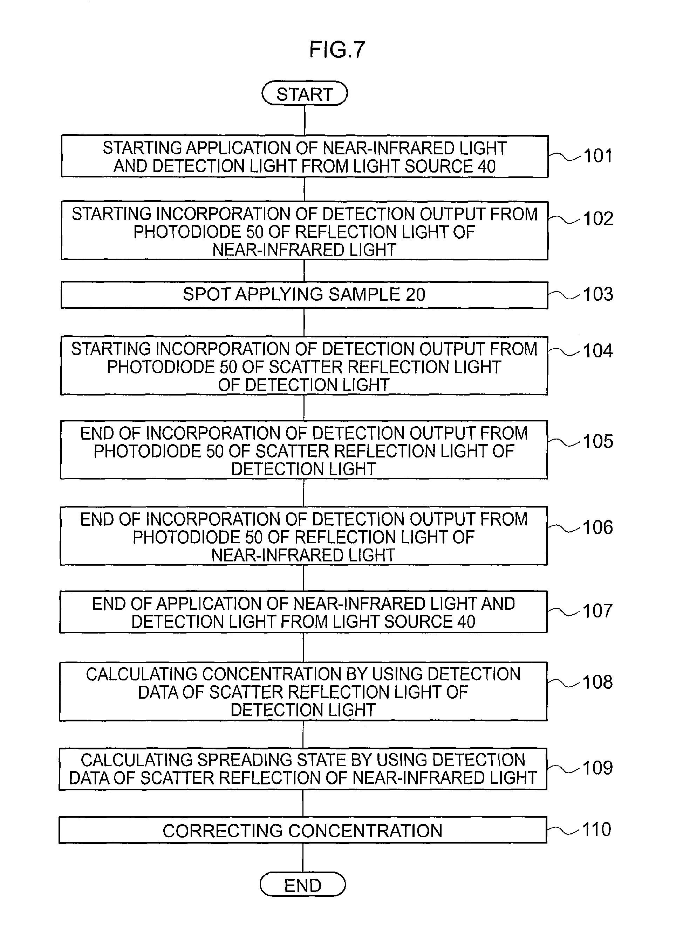

Fig. 7 is a flowchart for illustrating the biological material analysis method of the preferred embodiment of the invention. First, the irradiation of the analysis chip 10 with the detection light from the light source 42 of the light source 40 and the near-infrared light from the light source 43 of the light source 40 is started (Step 101). Next, incorporation of the detection output of the light reflected by the analysis chip 10 of the near-infrared light from the light source 43 by the photodiode 50 is started (Step 102). Next, a sample 20 is spot applied (Step 103). Next, the incorporation of the detection output of the light scatter reflected by the analysis chip 10 of the detection light from the light source 42 by the photodiode 50 is started (Step 104). Next, the incorporation of the detection output of the light scatter reflected by the analysis chip 10 of the detection light from the light source 42 by the photodiode 50 ends (Step 105). Next, the incorporation of the detection output of the light reflected by the analysis chip 10 of the near-infrared light from the light source 43 by the photodiode 50 ends (Step 106). Next, the irradiation of the analysis chip 10 with the detection light from the light source 42 of the light source 40 and the near-infrared light from the light source 43 of the light source 40 ends (Step 107). Next, by using the detection data of the scatter reflection light of the detection light, the concentration of the examination target in the sample 20 is obtained by using the calibration curve stored in advance in the memory (Step 108). Next, the spreading state as shown in Fig. 5 is calculated by using the detection data of the reflection light of the near-infrared light (Step 109). Next, the concentration correction calculation is performed as explained with reference to Figs. 6A to 6C (Step 110).

By arranging the light source 43 that emits light that includes light having a wavelength in a wavelength region in the near-infrared region (0.7 to 2.5 µm) at the same position (light source support 41) as the light source 43 that emits light for detecting a chromogenic material that is generated due to the reaction of the examination target in the sample 20 with the reagent in the reaction layer 14, the device is made compact, and it is possible to confirm whether or not the sample is spot applied immediately before the detection and detect an spot application mistake made by a dispenser as an error. The spot application is detected and can be made as a trigger of the measurement (zero-point of the measurement time). In addition, when the analysis chip (slide) 10 is irradiated over a wide range with the light that includes light having a wavelength in a wavelength region in the near-infrared region, the infrared absorption amount gradually varies depending on the spreading state of the sample 20, and thus the spreading speed can be detected with high accuracy. By using this spreading speed, the amount of the material to be detected can be determined with higher accuracy. It is more preferable that the plural light sources 43 and 43 be used and arranged in an array as shown in Fig. 4.

As described above, the various typical embodiments of the present invention have been described, but the invention is not limited to the embodiments. Therefore" the scope of the invention is limited only by the following claims.

## Claims

1. A biological material analyzer comprising:
an analysis chip holding unit that holds an analysis chip provided with a spreading layer for spreading a sample including a biological material that is an examination target and a reaction layer provided with a reagent that reacts with the biological material and generates a chromogenic material;
a first light source that irradiates the reaction layer with first light including a first wavelength component that is absorbed by the chromogenic material;
a first detection unit that detects first output light from the analysis chip when the reaction layer is irradiated with the first light;
a second light source that irradiates the reaction layer with second light including a second wavelength component that is absorbed by the biological material and is not absorbed by air, the second light having a wavelength region different from a wavelength region of the first light;
a second detection unit that detects second output light from the analysis chip when the reaction layer is irradiated with the second light; and
a calculation unit that calculates a first concentration of the biological material in the sample from the first output light detected by the first detection unit, calculates a spreading state of the sample in the spreading layer from the second output light detected by the second detection unit, and calculates a second concentration of the biological material in the sample by correcting the first concentration by using the calculated spreading state.

2. The biological material analyzer according to Claim 1,
wherein the first light source and the second light source are disposed at the same light source support.

3. The biological material analyzer according to Claim 1,
wherein the second output light is reflection light of the second light reflected by the analysis chip, and the spreading state of the sample in the spreading layer is a variation state of a light quantity of the reflection light of the second light reflected by the analysis chip with respect to time.

4. The biological material analyzer according to Claim 3,
wherein a time at which the variation state of a light quantity of the reflection light of the second light reflected by the analysis chip with respect to time initially varies is set as a start time of spot application of the sample to the spreading layer to calculate, from the variation state of the light quantity of the reflection light of the second light reflected by the analysis chip with respect to time, a reaction amount of the spreading state of the sample to the spreading layer from the start time of spot application to a time at which the reaction layer is irradiated with the first light to detect the first output light from the analysis chip and correct the first concentration, thereby calculating the second concentration of the biological material in the sample.

5. The biological material analyzer according to Claim 1,
wherein a wavelength region of the second light is in a wavelength region of 0.7 to 2.5 µm.

6. The biological material analyzer according to Claim 1,
wherein the first detection unit and the second detection unit are the same detection unit.

7. The biological material analyzer according to Claim 1,
wherein the calculation of the first concentration of the biological material in the sample from the first output light is performed by using a calibration curve that is obtained in advance and shows a relationship between the first output light and the first concentration of the examination target in the sample.

8. A biological material analysis method comprising:
irradiating a reaction layer of an analysis chip provided with a spreading layer for spreading a sample including a biological material that is an examination target and the reaction layer provided with a reagent that reacts with the biological material and generates a chromogenic material with first light including a first wavelength component that is absorbed by the chromogenic material to detect first output light of the first light from the analysis chip;
irradiating the reaction layer with second light including a second wavelength component that is absorbed by the biological material and is not absorbed by air and having a wavelength region different from a wavelength region of the first light to detect second output light of the second light from the analysis chip; and
calculating a first concentration of the biological material in the sample from the first output light detected by a first detection unit, calculating a spreading state of the sample in the spreading layer from the second output light detected by a second detection unit, and thereby calculating a second concentration of the biological material in the sample by correcting the first concentration by using the calculated spreading state.

9. The biological material analysis method according to Claim 8,
wherein the first light and the second light are respectively applied to the reaction layer from a first light source and a second light source that are disposed at the same light source support.

10. The biological material analysis method according to Claim 8,
wherein the detection of the second output light is the detection of reflection light of the second light reflected by the analysis chip, and the spreading state of the sample in the spreading layer is a variation state of a light quantity of the reflection light of the second light reflected by the analysis chip with respect to time.

11. The biological material analysis method according to Claim 10,
wherein a time at which the variation state of a light quantity of the reflection light of the second light reflected by the reaction layer with respect to time initially varies is set as a start time of spot application of the sample to the spreading layer to calculate, from the variation state of the light quantity of the reflection light of the second light reflected by the analysis chip with respect to time, a reaction amount of the spreading state of the sample to the spreading layer from the start time of spot application to a time at which the reaction layer is irradiated with the first light to detect the first output light from the analysis chip and correct the first concentration, thereby calculating the second concentration of the biological material in the sample.

12. The biological material analysis method according to Claim 8,
wherein a wavelength region of the second light is in a wavelength region of 0.7 to 2.5 µm.
